Europäisches Patentamt

European Patent Office

Office européen des brevets

(11) Veröffentlichungsnummer : **0 079 527**
**B1**

(19)

(12) **EUROPÄISCHE PATENTSCHRIFT**

(45) Veröffentlichungstag der Patentschrift :
26.06.85

(51) Int. Cl.⁴ : **H 04 L 5/14, H 04 L 7/02**

(21) Anmeldenummer : 82110146.6

(22) Anmeldetag : 04.11.82

(54) Datenübertragungsanlage für Vollduplexübertragung.

(30) Priorität : 13.11.81 DE 3145126

(43) Veröffentlichungstag der Anmeldung :
25.05.83 Patentblatt 83/21

(45) Bekanntmachung des Hinweises auf die Patenterteilung : 26.06.85 Patentblatt 85/26

(84) Benannte Vertragsstaaten :
BE DE FR GB IT NL SE

(56) Entgegenhaltungen :
DE-C- 2 453 628
GB-A- 1 401 436
US-A- 3 967 058
US-A- 3 983 498
US-A- 4 220 816
IBM TECHNICAL DISCLOSURE BULLETIN, Band 6,
Nr. 2, Juli 1963, Seiten 77-78, New York, USA

(73) Patentinhaber : Felten & Guilleaume Fernmeldeanlagen GmbH
Thurn-und-Taxis-Strasse 10 Postfach 4943
D-8500 Nürnberg 10 (DE)

(72) Erfinder : Bader, Edgar, Dipl.-Ing.
Parkstrasse 9
D-8501 Rückersdorf (DE)
Erfinder : Rohrbach, Gerd, Dipl.-Phys.
Bucherstrasse 77
D-8500 Nürnberg (DE)
Erfinder : Petersen, Jürgen, Dipl.-Ing.
Jakobstrasse 41
D-8500 Nürnberg (DE)
Erfinder : Kittel, Ludwig, Dr.
Eichenstrasse 37
D-8501 Heroldsberg (DE)

(74) Vertreter : Peuckert, Hermann
Philips Patentverwaltung GmbH Billstrasse 80 Postfach 10 51 49
D-2000 Hamburg 26 (DE)

## Beschreibung

Die Erfindung betrifft eine Datenübertragungsanlage für Vollduplexübertragung über eine Zweidrahtleitung zwischen einer Hauptstation und einer Nebenstation mit den Merkmalen des Oberbegriffs des Anspruchs 1.

Eine derartige Datenübertragungsanlage ist aus der DE-PS 24 53 628 bekannt. Derartige Anlagen werden für eine Signalübertragung über kurze Entfernungen mit kurzen Übertragungslaufzeiten eingesetzt. Auf der Zweidrahtleitung wird in schnellem Richtungswechsel abwechselnd von der Hauptstation zur Nebenstation oder umgekehrt jeweils nur die in einem einzigen Signalschritt enthaltene Information (1 Bit, 1 Dibit, 1 Tribit) übertragen. Der Übertragungscode ist so gewählt, daß in der Nebenstation hieraus der Signalschritttakt abzuleiten ist, wodurch die Nebenstation mit der Hauptstation synchronisiert wird.

Bei der Anlage nach der DE-PS 24 53 628 ist in der Nebenstation kein aktiver Takterzeuger vorgesehen. Dies hat zur Folge, daß bei einer Unterbrechung der Leitung das an die Nebenstation angeschlossene Endgerät von der Nebenstation keinen Takt erhält.

Im übrigen wird bei der DE-PS 24 53 628 von der Hauptstation zur Nebenstation ein bipolares RZ-Signal (RZ = return to zero) und von der Nebenstation zur Hauptstation ein unipolares RZ-Signal gesendet. Beide Sendesignale sind jeweils vom Takt aus NRZ-Signalen (NRZ = non return to zero) abgetastet. Eine gleichstromfreie Übertragung läßt sich bei den genannten RZ-Signalen nicht erreichen.

Eine Datenübertragungsanlage für Halb-Duplex-Übertragung ist in dem Artikel (« Timing system for data transmission » von G. Schwartz (IBM TECHNICAL DISCLOSURE BULLETIN, Band 6, Nr. 2, Juli 1963, Seiten 77 bis 78, New York, USA) beschrieben.

Nach diesem Artikel verfügt jeder der beiden Stationen, zwischen denen Daten ausgetauscht werden sollen über einen Quarzoszillator, von dem die nötigen Taktsignale durch Frequenzteilung abgeleitet werden. Vor Beginn des eigentlichen Datenaustausches müssen beide Stationen Synchronisationssignale austauschen, um die Phasendifferenz zwischen den einzelnen Taktsignalen auf erforderliche Werte zu bringen.

Aufgabe der Erfindung ist es, eine Schaltung mit den Merkmalen des Oberbegriffs des Anspruchs 1 vorzuschlagen, bei der die Nebenstation einen von dem Takt der Hauptstation unabhängigen Takt erzeugt, dessen Taktperiode sich beim Empfang schnell auf die Taktperiode der Hauptstation synchronisiert.

Obige Aufgabe ist durch die Merkmale des kennzeichnenden Teils des Anspruchs 1 gelöst. Durch die aktive Takterzeugung in der Nebenstation ist sichergestellt, daß das mit dieser verbundene Endgerät von der Nebenstation immer Taktgesteuert ist und zwar im Empfangsfall mit einem auf den Sendetakt der Hauptstation synchronisierten Takt und bei Unterbrechung der Übertragungsstrecke von einem Takt, der zwar vom Takt der Hauptstation abweicht, sich bei einsetzendem Empfang jedoch schnell auf diesen synchronisiert.

Vorteilhafte Ausgestaltungen der Erfindung ergeben sich aus der folgenden Beschreibung und den Unteransprüchen. In der Zeichnung zeigen :

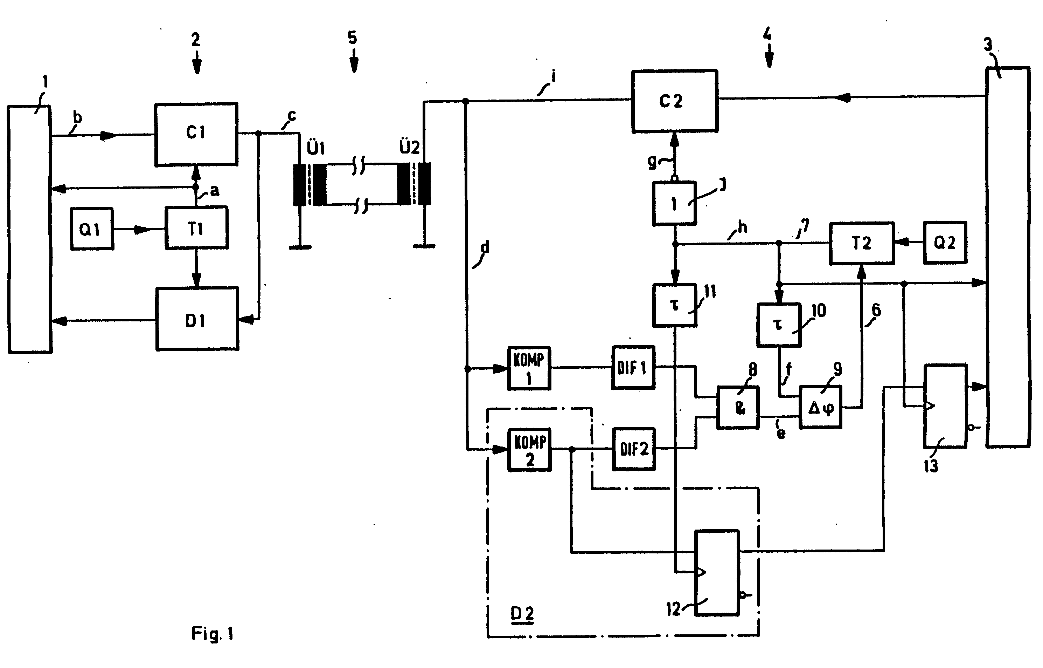

Figur 1   ein Blockschaltbild einer Datenübertragungsanlage und

Figur 2   Zeitdiagramme des Schaltbilds der Fig. 1.

Ein Endgerät 1 ist mit einer Hauptstation 2 und ein Endgerät 3 ist mit einer Nebenstation 4 verbunden. Bei den Endgeräten handelt es sich beispielsweise um Teletex-Geräte. Die Hauptstation 2 ist mit der Nebenstation 4 über eine Zweidrahtleitung 5 verbunden, welche kurz ist, beispielsweise innerhalb eines Gebäudes verlegt ist.

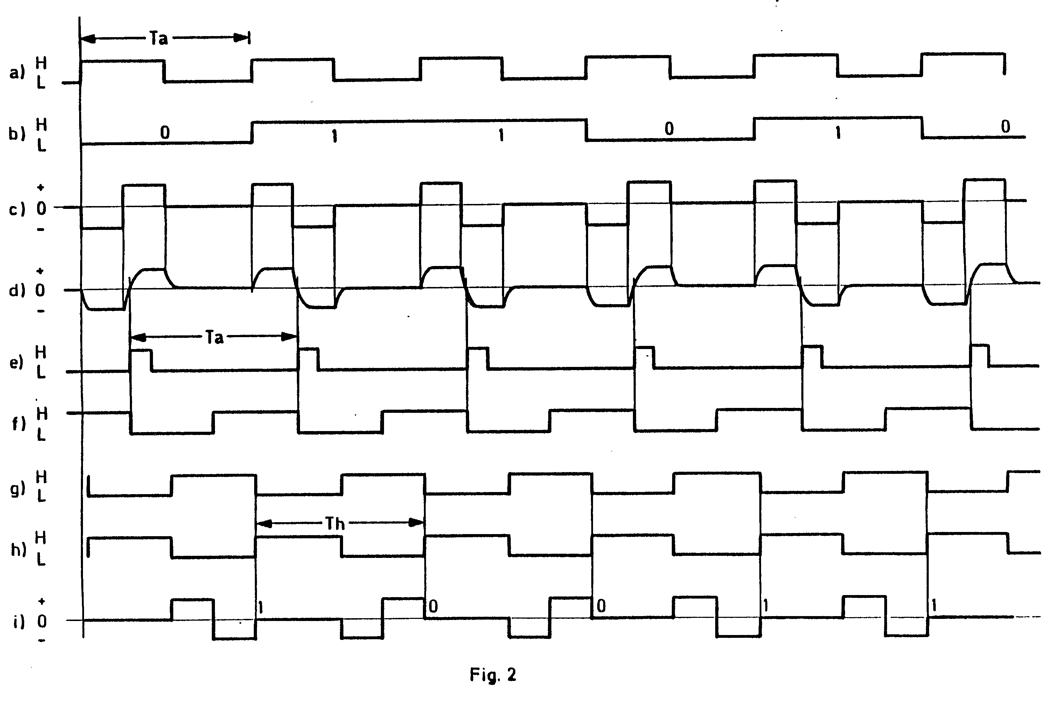

Die Hauptstation 2 weist einen Takterzeuger T1 auf, der von einem Quarzoszillator Q1 gesteuert ist und einen Sendetakt a (vgl. Fig. 2) einerseits an einen Codierer C1 und andererseits an einen Decodierer D1 leitet. Der Codierer C1 übernimmt von dem Endgerät 1 Sendedaten b (vgl. Fig. 2) und leitet diese als codiertes Sendesignal c auf einen Übertrager Ü1, der an der Zweidrahtleitung 5 liegt. Der Übertrager Ü1 ist auch mit dem Decodierer D1 verbunden, der Empfangsdaten an das Endgerät 1 übergibt.

Die Nebenstation 4 weist einen Codierer C2 auf, der von dem Endgerät 3 übernommene Sendedaten in gleicher Weise wie der Codierer C1 in ein Sendesignal i (vgl. Fig. 2) umsetzt und an einen Übertrager Ü2, der an die Zweidrahtleitung 5 angeschlossen ist, übergibt. In der Nebenstation 4 ist ein Quarzoszillator Q2 vorgesehen, der mit einer Nennfrequenz von beispielsweise 4,6 MHz arbeitet. Der Oszillator Q2 ist an einen Takterzeuger T2 angeschlossen, der einen Teiler aufweist. Der Teiler ist in seinem Teilerverhältnis zwischen n − 1 und n + 1 an einem Eingang 6 umschaltbar und liefert an seinem Ausgang 7 den Empfangstakt h. n ist das Verhältnis der Frequenzen des Oszillators Q2 und des Empfangstaktes h. Dieser wird nach Invertierung durch einen Inverter I als Sendetakt g dem Codierer C2 zugeführt.

Die Nebenstation 4 weist zwei Komparatoren KOMP1 und KOMP2 auf, an die der Übertrager Ü2 angeschlossen ist. In dem einen Komparator werden die positiven, in dem anderen die negativen Anteile des Empfangssignals d gleichgerichtet und in ihrer Amplitude begrenzt. Jedem der Komparatoren ist eine Differenzierschaltung DIF1 bzw. DIF2 nachgeschaltet, deren Ausgangsimpulse über ein UND-Gatter 8 verknüpft sind. Am Ausgang des UND-Gatters 8 ergibt sich damit das Signal e, dessen Impulse im Nulldurchgang des Empfangssignals d auftreten. Das Nulldurchgangssignal e ist an einen Eingang einer Phasenvergleichsschaltung 9 gelegt, an deren anderen Eingang ein Vergleichstakt f gelegt ist, der über eine Verzögerungsstufe 10 vom Empfangstakt h am Ausgang 7 abgeleitet ist. Die Phasenvergleichsschaltung 9 liegt am Eingang 6 des Teilers. Sie steuert diesen so, daß sein Teilerverhältnis n + 1 beträgt, wenn sich die Signale e und f zeitlich nicht überlappen oder wenn kein Empfangssignal d vorliegt. Sein Teilerverhältnis beträgt n − 1, wenn sich die Signale e und f überlappen.

Der Ausgang 7 ist mit einem Takteingang des Endgeräts 3 verbunden. Der Komparator KOMP2 bildet zusammen mit einem vom Ausgang 7 über eine weitere Verzögerungsstufe 11 gesteuerten Abtaster 12 den Decodierer D2 der Nebenstation 4. Die Abtastwerte werden von einem Flip-Flop 13 übernommen und als Empfangsdaten dem Endgerät 3 zugeführt. Das Flip-Flop 13 ist vom Empfangstakt h gesteuert.

Die Arbeitsweise der beschriebenen Anlage ist folgende:

Der Sendetakt a hat eine Taktperiode Ta und ein Tastverhältnis von 50 %. Während des « 1 »-Signals des Sendetakts a arbeitet der Codierer C1 und der Decodierer D1 ist gesperrt. Während des « 0 »-Signals ist der Codierer C1 gesperrt und der Decodierer D1 arbeitet.

In Fig. 2 sind für die Sendedaten b beispielsweise die NRZ-Signale « 0 », « 1 », « 1 », « 0 » « 1 » dargestellt. Diese Sendedaten b werden im Codierer C1 während des « 1 »-Signals des Taktes a in das Sendesignal c umgesetzt, das gleichstromfrei ist. Denn jede Sendesignaleinheit besteht aus einem negativen und positiven Signalanteil, wobei bei einem « 0 »-Signal dem negativen Anteil der positive Anteil folgt und bei einem « 1 »-Signal dem positiven der negative Anteil folgt (Fig. 2c).

Das Sendesignal c stellt sich nach dem Durchlaufen der Zweidrahtleitung 5 als Empfangssignal d dar. Aus diesem werden dessen Nulldurchgänge e abgeleitet. Diese treten ersichtlich mit der Taktperiode Ta des Sendetakts a auf. Mit dieser soll der Empfangstakt h synchronisiert werden, dessen Taktperiode mit Th bezeichnet ist. Hierfür wird der vom Generator Q2 bzw. Takterzeuger T2 über die Verzögerungsstufe 10 abgeleitete Vergleichstakt f in der Phasenlage seiner abfallenden Flanke mit der ansteigenden Flanke des Nulldurchgangssignals e verglichen. Die ansteigende Flanke des Nulldurchgangssignals e ist gegenüber der ansteigenden Flanke des Sendetaktes a um eine viertel Taktperiode Ta verzögert. Um dies zu berücksichtigen, wird auch die abfallende, zum Vergleich mit dem Nulldurchgangssignal e ausgewertete Flanke des Vergleichstaktes f von der Verzögerungsstufe 10 um dieselbe Zeit verzögert. Überlappt das Signal f das Signal e, wird der Teiler auf das Teilerverhältnis n − 1, wobei n beispielsweise 384 ist, geschaltet. Überlappt das Signal e das Signal f nicht, wird das Teilerverhältnis auf n + 1 geschaltet. Damit jittert die abfallende Flanke des Vergleichstakts f um die ansteigende Flanke des Nulldurchgangssignals e. Es ist der Takt der Nebenstation 4 am Ausgang 7 auf den Sendetakt der Hauptstation 2 eingerastet. Der Sendetakt g ist zum Empfangstakt h und damit also zum Sendetakt a invertiert, so daß ein aus den Sendedaten des Endgeräts 3 abgeleitetes Sendesignal i, im Beispielsfalle « 1 », « 0 », « 0 », « 1 », « 1 », übertragen wird, wenn der Codierer C1 sperrt und der Decodierer D1 aktiv ist. Leitungsbedingte Laufzeiten sind hier nicht näher erörtert, da sie gegenüber einer Taktperiode vernachlässigbar kurz sind.

Die Verzögerungsstufe 11 verzögert den Empfangstakt h um 3/8 der Taktperiode Th, um im Abtaster 12 eine optimale Abtastung zu gewährleisten. Optimale Abtastung bedeutet, daß die Abtastung bei größerer Augenöffnung erfolgt.

Solange die Nebenstation 4 kein Empfangssignal d empfängt, arbeitet der Teiler mit einem Teilerverhältnis n + 1. Dies stellt eine relativ große Abweichung der Taktperiode Th gegenüber der Taktperiode Ta dar. Die Phase des Vergleichstakts f durchläuft damit in kurzer Zeit die Periode Ta des Nulldurchgangssignals e. Sobald ein Empfangssignal e auftritt, ist also sehr schnell der Zeitpunkt erreicht, zu dem eine abfallende Flanke des Vergleichstakts f mit einer ansteigenden Flanke des Nulldurchgangssignals e zusammentrifft, wodurch dann die gewünschte Synchronisierung erfolgt.

**Patentansprüche**

1. Datenübertragungsanlage für Voll-Duplex-Übertragung über eine Zweidrahtleitung zwischen einer Hauptstation und einer Nebenstation, wobei in der Hauptstation ein Sendetakt mit einer Taktperiode erzeugt wird, in deren erste Hälfte eine Signalübertragung von der Hauptstation zur Nebenstation und in deren zweiten Hälfte eine Signalübertragung von der Nebenstation zur Hauptstation erfolgt und der Signalübertragungscode so gewählt ist, daß die Signalsendung der Nebenstation mit dem Sendetakt synchronisierbar ist, dadurch gekennzeichnet, daß in der Nebenstation ein selbständiger, umschaltbarer Takterzeuger vorgesehen ist, der einen Nebenstationstakt erzeugt, dessen Taktperiode von der Taktperiode des Sendetaktes um einen festen Betrag abweicht, solange die beiden Taktperioden nich synchronisiert sind, und daß eine Phasenvergleichsschaltung für die beiden Taktperioden den umschaltbaren Takterzeuger steuert.

2. Datenübertragungsanlage nach Anspruch 1, dadurch gekennzeichnet, daß der Takterzeuger einen Teiler aufweist, der durch die Phasenvergleichsschaltung von einem Teilverhältnis n + 1 auf ein Teilerverhältnis n + 1 auf ein Teilverhältnis n − 1 umgeschaltet wird.

3. Datenübertragungsanlage nach Anspruch 1 oder 2, dadurch gekennzeichnet, daß die Phasenvergleichsschaltung die Phasenlage eines Nulldurchgangs des Empfangssignals mit der Phasenlage eines Taktsignales des Takterzeugers vergleicht.

## Claims

1. A data transmission arrangement for full-duplex transmission *via* a two-wire line between a central station and a substation, a transmission clock being generated in the central station, having a clock period in whose first half signal transmission is effected from the central station to the sub-station and in the second half signal transmission is effected from the sub-station to the central station, the signal transmission code being chosen such that the signal transmitted by the sub-station is synchronizable with the transmission clock, characterized in that the sub-station comprises an automatic, switchable clock pulse generator producing a sub-station clock pulse whose clock period deviates from the clock period of the transmission clock by a fixed amount, as long as the two clock periods are not in synchronism and that a phase comparator circuit controls the switchable clock pulse generator for the two clock periods.

2. A data transmission arrangement as claimed in Claim 1, characterized in that the clock pulse generator comprises a divider which is switched by the phase comparator circuit from a dividing ratio n + 1 to a divider ratio n − 1.

3. A data transmission arrangement as claimed in Claim 1 or 2, characterized in that the phase comparator circuit compares the phase position of a zero-crossing of the received signal with the phase position of a clock signal of the clock pulse generator.

## Revendications

1. Installation de transmission de données pour transmission en duplex total par l'intermédiaire d'une ligne à deux conducteurs entre un poste principal et un poste secondaire, pour laquelle une horloge d'émission présentant une période d'horloge s'obtient dans le poste principal, horloge d'émission dans la première moitié de laquelle s'effectue une transmission de signal du poste principal au poste secondaire et dans la deuxième moitié une transmission de signal du poste secondaire au poste principal et le code de transmission de signal est choisi de façon que l'émission de signal du poste secondaire puisse être mise en synchronisme avec l'impulsion d'émission, caractérisée en ce que dans le poste secondaire est prévu un générateur d'impulsions commutable indépendant fournissant une horloge de poste secondaire dont la période d'horloge s'écarte d'un montant fixe de la période d'horloge de l'horloge d'émission, aussi longtemps que lesdites périodes d'horloge ne sont pas mises en synchronisme et qu'un circuit comparateur de phase assure le réglage des deux périodes d'horloge du générateur d'impulsions commutable.

2. Installation de transmission de données selon la revendication 1, caractérisée en ce que le générateur de signaux d'horloge présente un diviseur, qui est commuté par le circuit comparateur de phase d'un rapport de division n + 1 à un rapport de division n − 1.

3. Installation de transmission de données selon la revendication 1 ou 2, caractérisée en ce que le circuit comparateur de phase assure la comparaison de la position de phase d'un passage par zéro du signal de réception avec la position de phase d'un signal d'horloge d'un générateur de signaux d'horloge.

Fig. 1

Fig. 2